# EUROPEAN PATENT SPECIFICATION

(11) **EP 0 579 660 B1**
(45) Date of publication and mention of the grant of the patent: **21.01.1998**
(21) Application number: 92907953.1
(22) Date of filing: 08.04.1992
(51) Int. Cl.: F16L 55/10, E21B 29/08

(54) **PLUMBLING APPARATUS**
ARMATUR
APPAREIL DE PLOMBERIE

(30) Priority: 09.04.1991 GB 9107505
(43) Date of publication of application: 26.01.1994
(73) Proprietor: COLLINS, John William, Cardiff CF3 9TW (GB)
(72) Inventor: COLLINS, John William, Cardiff CF3 9TW (GB)
(74) Representative: Newell, William Joseph
(86) International application number: GB9200629
(87) International publication number: WO9218800

(56) References cited:
- US-A- 2 984 129
- US-A- 3 032 867
- US-A- 3 766 979
- US-A- 4 215 749
- US-A- 4 411 459
- US-A- 4 516 598

## Description

This invention relates to plumbing apparatus for being applied to a pipe and operated to prevent or reduce fluid flow along the pipe. In particular, but not exclusively, the invention extends to a plumbing device of this type which may later function as a valve for controlling flow along the pipe.

When carrying out building work it is often necessary to isolate a water supply. This is easily done if the stop cock is accessible and can be turned off. However, this is often not possible and so it becomes necessary to call out a plumber and/or the Water Board to assist. This results in delay and added cost.

US-A-4,516,598 discloses a safety valve for being mounted on a pipe such as an oil well pipe and operable to seal the pipe if a leak occurs downstream of the valve. The valve comprises a collar which is rotatably mounted on the pipe and which carries in diametrically opposed parts a circular cutting blade and an entirely separate movable plug. In use the circular cutting blade cuts a hole in the pipe, the collar is rotated through 180° and the plug is inserted into the pipe to seal it. The described arrangement does not allow opening of the pipe and insertion of a valve arrangement in a single operation.

Accordingly, this invention provides plumbing apparatus for being attached to a length of pipe or other fluid carrying means, and being operable to remove a portion of said pipe or other fluid carrying means and interpose therein means for controlling the flow therealong, said apparatus comprising:
first means for being secured to said length of pipe or other fluid carrying means, and
second means engageable with said first means for being advanced towards said pipe or other fluid carrying means in a generally transverse direction, and including a distal cutter means for removing a position of said pipe or other fluid carrying means,
wherein said second means includes rearwardly of said cutter means, in the sense of said advancement, a valve arrangement for being interposed in said pipe or other fluid carrying means after removal of said portion, said valve arrangement including a passage means through which substantially all of the fluid flowing along said pipe or other fluid carrying means may pass and a valve control element located in said passage means and selectively operable to prevent or control the flow of fluid along said pipe or other fluid carrying means.

Said second means is preferably threadedly engageable with said first means.

Preferably said cutter means comprises a sharpened position or a series of teeth for scribing or cutting said pipe or other fluid carrying means.

Said first means conveniently comprises two parts sealingly clampable to either side of the portion to be removed.

The apparatus preferably includes seal means for providing a seal between said passage means and the adjacent regions of said pipe or other fluid carrying means.

Advantageously, said seal means is resiliently compressible, and said apparatus includes means for compressing said seal means to assist intimate contact thereof with the pipe or other fluid carrying means and said passage means.

In one arrangement the seal mans comprises a seal element associated with said second means for applying compression to said seal means, whilst in another, the seal means comprises a seal element associated with said first means and arranged to be compressed when said second means is fully engaged therewith.

Preferably, said second means includes a cutter valve element defining said cutting means and said valve arrangement and said cutter/valve element is rotatably received in an outer sleeve, said outer sleeve being externally threaded for threadedly engaging said first means whereby the angular position of the valve arrangement may be adjusted relative to said outer sleeve.

This arrangement preferably includes releasable locking means for preventing rotation of said cutter/valve element, and marker means or other indicia to indicate the orientation of said passage means.

The invention may be performed in various ways and an embodiment thereof will now be described in detail by way of example only, reference being made to the accompanying drawings, in which:-
Figure 1 is a cross-sectional view of a first embodiment of plumbing device in accordance with the invention before the device has been used to cut the pipe;
Figure 2 is a cross-sectional view of the embodiment of Figure 1 with the pipe cut and the device functional as a stop tap;
Figure 3 is a top plan view of the embodiment of plumbing device illustrated in Figures 1 and 2;
Figure 4 is a cross-sectional view of a second embodiment of plumbing device in accordance with the invention before the device has been used to cut the pipe;
Figure 5 is a cross-sectional view of the embodiment of Figure 4 with the pipe cut and the device functional as a stop tap;
Figure 6 is a perspective view of an example of cutting profile for either of the first or second embodiments, and
Figure 7 is a perspective view of a seal sleeve for either of the first or second embodiments.

The two illustrated embodiments of plumbing device are intended to be applied to insert a stop tap in a "live" pipe carrying water, gas or other fluid without requiring draining down or isolation of the pipe.

In general, both of the illustrated embodiments comprise a split two part clamp 10 (herein referred to as "first means") which is fitted around a pipe 12 and has a threaded bore 14 which receives a threaded cutter/valve 16 (herein referred to as "second means"). In use, the cutter/ valve 16 is screwed into the clamp 10 so that the cutter/ valve 16 removes a section of the pipe and then interposes sealingly a valve between the two severed ends of the pipe.

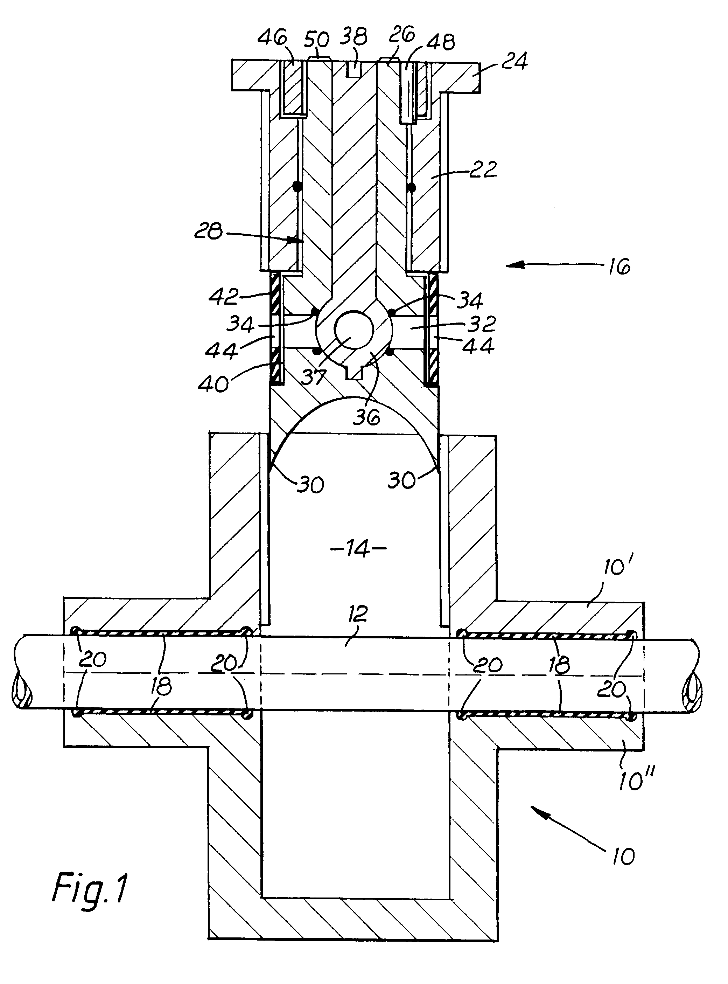

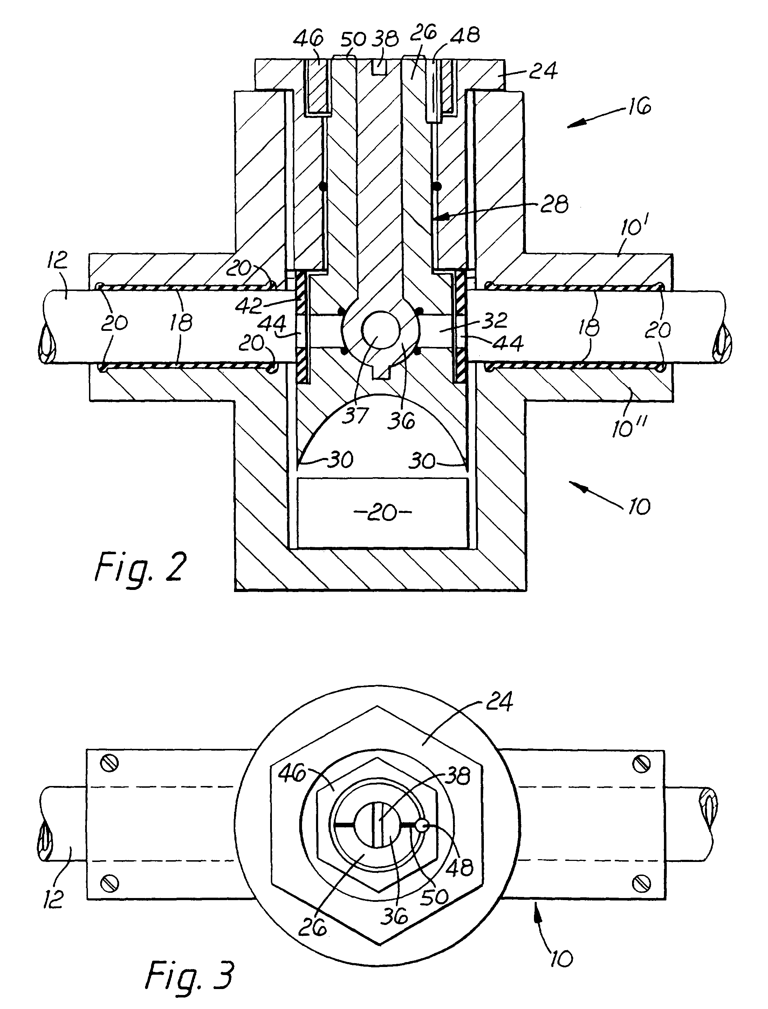

Referring now specifically to Figures 1 to 3, the first embodiment of clamp 10 is split along a horizontal plane into upper and lower parts 10' and 10" respectively, and is sealed to the pipe 12 by seal strips or sheets 18 which are located in position by lips 20 formed integrally with the sheets and locating in grooves in the upper and lower clamp parts. The form of the sheet is illustrated in Figure 7. The upper and lower parts 10', 10" are secured together by suitable means (not shown) such as bolts, shackles etc.

The assembled clamp 10 defines a threaded bore 14 and, in its lower portion, a chamber for receiving a severed section 20 of pipe.

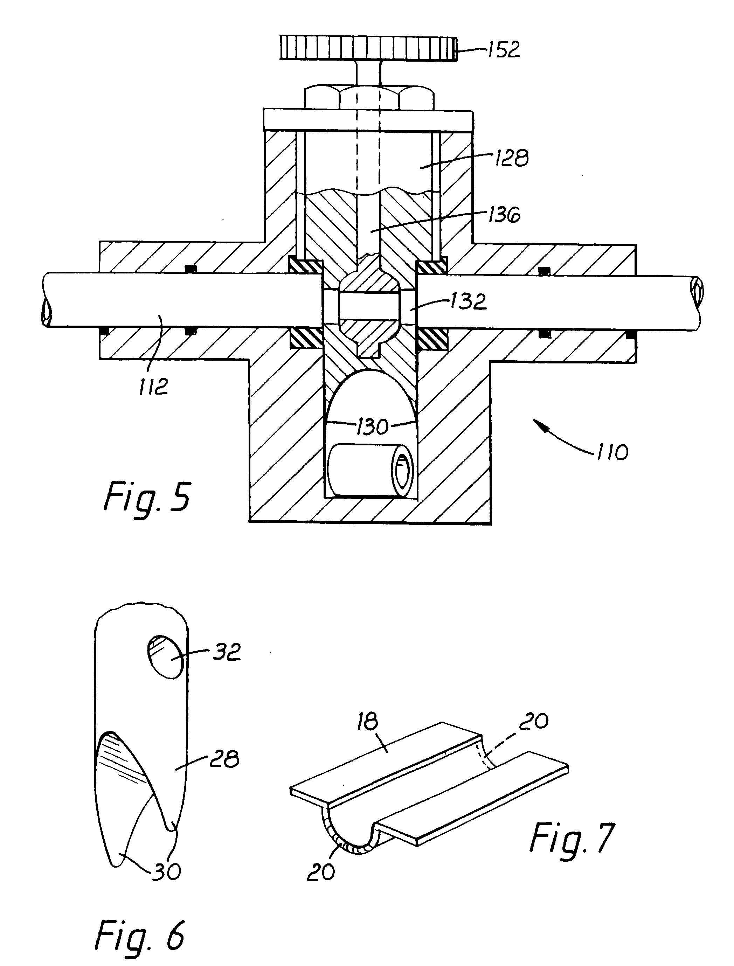

The cutter/valve 16 comprises an outer threaded sleeve 22 with a hex drive 24 at its upper end. Rotatably received in the bore of the sleeve 22 is the shaft 26 of the cutter/valve element 28 which carries at its lower end two sharpened portions 30, the profile of which may be better seen from Figure 6. Above the sharpened portions 30 the cutter/valve element includes a transverse bore 32 and associated seals 34 which co-operate with a rotatable valve member 36 which has a part spherical portion with a transverse bore 37 which can be brought into line with the bore 37 in the cutter/valve element. At its upper end the valve member 36 has a slot or marker 38 aligned with the bore 37.

Just above the sharpened portions 30, the cutter/valve element 28 has a cylindrical portion 40 of reduced diameter which extends upwardly beyond the bore 32 for a total distance somewhat greater than the diameter of the pipe 12. Around the cylindrical portion is fitted a seal sleeve 42 of a compressible rubber or rubber-like material with apertures 44 next to the ends of the bore 32. The upper portion of the seal sleeve 42 projects above an inwardly directed shoulder of the cutter/valve element 28 to face the lower end of the sleeve 22. The cutter/valve element 28 is threaded at its upper end and engages a nut 46 received in a recess in the upper end of the sleeve 22. Tightening the nut 46 draws the cutter/valve element upwardly relative to the sleeve, so compressing the seal sleeve 42.

The cutter/valve element 28, the valve member 36 and the sleeve 22 are initially kept fast with each other by a removable locking pin 48. The upper end of the cutter/valve element 28 also has a slot or other marker 50 aligned with the bore 32 in its lower end.

In use, the two parts of the clamp 10 are applied to the required section of the pipe 12 and secured tightly to the pipe. The cutter/valve 16, comprising the cutter/valve element 28, the valve member 26 and the sleeve 22 fixed with respect to each other by the pin 48 (with the valve closed) is threadedly engaged with the bore 14 and screwed down using a wrench or the like on the hex drive 24. The sharpened portions 30 of the cutter scribe through the pipe to sever a section 20. The lower portion of the hex drive 24 eventually sealingly engages the flat on the clamp 10 which surrounds the bore 14, and the severed section 20 falls into the lower part of the clamp.

The locking pin 48 is then removed and the cutter/valve element 28 rotated to bring the duct 32 into alignment with the pipe 12, using the marker 50 as a cue. Nut 46 is then tightened to compress the seal sleeve 42 to form a good seal between the severed ends of the pipe 12 and the bore 32, and then locked again if required.

The device is now ready to function as a stop tap and may be operated by inserting the blade of a screwdriver into the slot 38 in the upper end of the valve member 36.

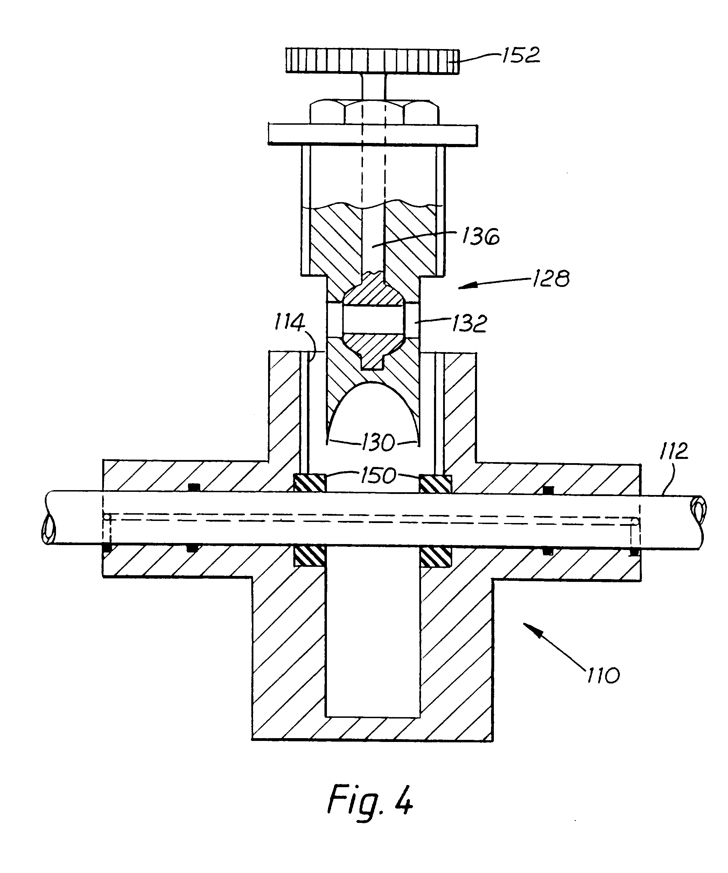

Referring now to the embodiment of Figures 4 and 5, similar parts will be given the corresponding reference numerals prefixed by "1". The clamp 110 is of similar form to that of the previous embodiment, except that here the seals 150 which provide sealing between the severed ends of the pipe are located in the clamp 110 rather than on the cutter/valve element 128. Also the construction of the cutter/valve element 128 is somewhat simpler. It is externally threaded to be engaged in the bore 114 of the clamp 110. The cutter/valve element 128 has cutter portions 130 and a transverse bore 132. The bore 132 is opened and closed by a rotatable valve member 136 using a handwheel 152.

In use, the clamp 110 is applied and secured to the pipe as before and the cutter/valve element 128 engaged with the bore and screwed fully home, severing the pipe section 120 and bringing the bore 132 into registration with the pipe 112. In this second embodiment, the threads are designed to ensure that such registration occurs automatically. As the lower end of the cutter/valve element 128 nears its fully home position, it compresses the seals 150 to effect a tight seal between the pipe and the valve/cutter element 128. The device may now be operated as a stop tap using the handwheel 152.

It will be appreciated that many variations are possible, for example many different types of valving may be used such as gate valves, butterfly valves etc. instead of the ball valve shown.

## Claims

1. Plumbing apparatus for being attached to a length of pipe or other fluid carrying means (12;112), and being operable to remove a portion of said pipe or other fluid carrying means (12;112) and interpose therein means for controlling the flow therealong, said apparatus comprising:
first means (10;110) for being secured to said length of pipe or other fluid carrying means (12;112), and
second means (16;128) engageable with said first means (10;112) for being advanced towards said pipe or other fluid carrying means (12;112) in a generally transverse direction, and including a cutter means (30;130) for removing a portion of said pipe or other fluid carrying means (12;112),
characterised in that said second means (16;128) includes rearwardly of said cutter means (30;130), in the sense of said advancement, a valve arrangement (36/32;136/132) for being interposed in said pipe or other fluid carrying means after removal of said portion, said valve arrangement including a passage means through which substantially all of the fluid flowing along said pipe or other fluid carrying means (12;112) may pass and a valve control element (36;136) located in said passage means (32;132) and selectively operable to prevent or control the flow of fluid along said pipe or other fluid carrying means (12;112).

2. Plumbing apparatus according to Claim 1, wherein said second means (16;128) is threadedly engaged with said first means (10;110).

3. Plumbing apparatus according to Claims 1 or 2, wherein said cutter means (30;130) comprises a sharpened portion or a series of teeth for scribing or cutting said pipe or other fluid carrying means (12;112).

4. Plumbing apparatus according to any preceding claim, wherein said first means (10;110) comprises two parts (10',10'') sealingly clampable to either side of the portion to be removed.

5. Plumbing apparatus according to any preceding claim, including seal means (42;150) for providing a seal between said passage means (32;132) and the adjacent regions of said pipe or other fluid carrying means (12;112).

6. Plumbing apparatus according to Claim 5 wherein said seal means (42;150) is resiliently compressible, and said apparatus includes means (22) for compressing said seal means (42) to assist intimate contact thereof with the pipe or other fluid carrying means (12) and said passage means (32).

7. Plumbing apparatus according to Claim 6, wherein said seal mans comprises a seal element (42) associated with said second means (16) and said second means includes means (22) for applying compression to said seal means (42).

8. Plumbing apparatus according to Claim 6, wherein said seal means comprises a seal element (150 Fig 4) associated with said first means (11) and arranged to be compressed when said second means (16) is fully engaged therewith.

9. Plumbing apparatus according to Claim 2 or any Claim dependent thereon, wherein said second means (16;128) includes a cutter/valve element (26/30) defining said cutting means (30) and said valve arrangement (32/36) and said cutter/valve element (26/30) is rotatably received in an outer sleeve (22), said outer sleeve (22) being externally threaded for threadedly engaging said first means (10) whereby the angular position of the valve arrangement (32/36) may be adjusted relative to said outer sleeve (22).

10. Plumbing apparatus according to Claim 9, including releasable locking means (48) for preventing rotation of said cutter/valve element (26/30) relative to said outer sleeve (22) and wherein said cutter/valve element (26/30) includes marker means or other indicia (50) to indicate the orientation of said passage means (32).

## Patentansprüche

1. Armatur zur Anbringung an einem Rohr (12;112) oder dergl. fluidführenden Mittel, die betätigbar ist, um einen Abschnitt des Rohres (12;112) oder dergl. zu entfernen und Mittel zum Steuern des Flusses entlang des Rohres einzusetzen, mit
einer ersten Vorrichtung (10,110), die an dem Rohr (12;112) oder dergl. anbringbar ist, und
einer zweiten Vorrichtung (16;128), die mit der ersten Vorrichtung (10;110) zusammenbaubar ist und im wesentlichen in Querrichtung auf das Rohr (12;112) oder dergl. hin bewegbar ist und eine Schneideinrichtung (30;130) zum Entfernen eines Abschnittes des Rohres (12;112) oder dergl. aufweist,
dadurch gekennzeichnet, daß die zweite Vorrichtung (16;128), in Richtung der Vorschubbewegung hinter der Schneideinrichtung (30;130) eine Ventilanordnung (36/32;136/132) enthält, die nach dem Entfernen des Rohrabschnittes in das Rohr oder dergl. einsetzbar ist und einen Kanal aufweist, durch den im wesentlichen der gesamte, durch das Rohr (12;112) oder dergl. strömende Fluß passieren kann, sowie ein Ventilsteuerelement (36;136) in dem Kanal (32;132), das wahlweise betätigbar ist, um den Fluidfluß durch das Rohr (12;112) oder dergl. zu verhindern oder zu steuern.

2. Armatur nach Anspruch 1, dadurch gekennzeichnet, daß die zweite Vorrichtung (16;128) mit der ersten Vorrichtung (10;110) verschraubt ist.

3. Armatur nach Anspruch 1 oder 2, dadurch gekennzeichnet, daß die Schneideinrichtung (30;130) einen geschärften Abschnitt oder eine Anzahl von Zähnen zum Anreißen oder Abschneiden des Rohres (12;112) oder dergl. aufweist.

4. Armatur nach einem der vorhergehenden Ansprüche, dadurch gekennzeichnet, daß die erste Vorrichtung (10,110) zwei Teile (10',10") aufweist, die dichtend auf beiden Seiten des zu entfernenden Abschnittes klemmbar ist.

5. Armatur nach einem der vorhergehenden Ansprüche, gekennzeichnet durch Dichtungsmittel (42;150) zwischen dem Kanal (32;132) und den benachbarten Bereichen des Rohres (12;12) oder dergl..

6. Armatur nach Anspruch 5, dadurch gekennzeichnet, daß die Dichtungsmittel (42;150) nachgiebig zusammendrückbar sind und die Armatur Mittel (32) zum Zusammendrücken der Dichtungsmittel (42) aufweist, um einen engen Kontakt derselben mit dem Rohr (12) oder dergl. und dem Kanal (32) zu unterstützen.

7. Armatur nach Anspruch 6, dadurch gekennzeichnet, daß die Dichtungsmittel ein Dichtelement (42) aufweisen, das mit der zweiten Vorrichtung (16) assoziiert ist und daß diese Vorrichtung Mittel (22) zum Ausüben eines Druckes auf das Dichtelement (42) enthält.

8. Armatur nach Anspruch 6, dadurch gekennzeichnet, daß die Dichtungsmittel ein Dichtelement (150 Fig.4) aufweisen, das mit der ersten Vorrichtung (110) assoziiert und so angeordnet ist, daß es zusammengedrückt wird, wenn die zweite Vorrichtung (16) vollständig angebaut ist.

9. Armatur nach Anspruch 2 oder einem von diesem abhängigen Anspruch, dadurch gekennzeichnet, daß die zweite Vorrichtung (16;128) ein Schneid/Ventilelement (26/30) enthält, das die Schneideinrichtung (30) und die Ventilanordnung (32/36) bildet und das drehbar in einer äußeren Hülse (22) aufgenommen ist, die mit einem Außengewinde versehen ist, das in die erste Vorrichtung (10) einschraubbar ist, wodurch die Winkellage der Ventilanordnung (32/36) relativ zu der äußeren Hülse (22) einstellbar ist.

10. Armatur nach Anspruch 9, dadurch gekennzeichnet, daß eine lösbare Verriegelung (48) zur Verhinderung einer Drehung des Schneid/Ventilelements (26/30) relativ zu der äußeren Hülse (22) vorgesehen ist und daß das Schneid/Ventilelement (26/30) eine Markierung (50) oder dergl. aufweist, um die Lage des Kanals (32) kenntlich zu machen.

## Revendications

1. Appareil de plomberie destiné à être fixé à une longueur de conduit ou d'un autre moyen de transport de fluide (12;112), et étant actionnable pour retirer une partie dudit conduit ou dudit autre moyen de transport de fluide (12;112) et interposer dans celui-ci des moyens pour contrôler l'écoulement le long de celui-ci, ledit appareil comprenant :
- un premier moyen (10;110) destiné à être fixé à ladite longueur de conduit ou autre moyen de transport de fluide (12;112) ; et
- un second moyen (16;128) susceptible d'être engagé avec ledit premier moyen (10;112) pour être avancé vers ledit conduit ou autre moyen de transport de fluide (12;112) dans une direction généralement transversale, et comprenant un moyen de découpe (30;130) pour retirer une partie dudit conduit ou autre moyen de transport de fluide (12;112),
caractérisé par le fait que ledit second moyen (16;128) comprend, à l'arrière dudit moyen de découpe (30;130), dans le sens dudit avancement, un dispositif de soupape (36/32;136/132) destiné à être interposé dans ledit conduit ou autre moyen de transport de fluide après le retrait de ladite partie, ledit dispositif de soupape comprenant un moyen de passage à travers lequel sensiblement tout le fluide s'écoulant le long dudit conduit ou autre moyen de transport de fluide (12;112) peut passer et un élément de commande de soupape (36;136) situé dans ledit moyen de passage (32;132) et actionnable sélectivement pour empêcher ou contrôler l'écoulement de fluide le long dudit conduit ou autre moyen de transport de fluide (12;112).

2. Appareil de plomberie selon la revendication 1, dans lequel ledit second moyen (16;128) est engagé par vissage avec ledit premier moyen (10;110).

3. Appareil de plomberie selon l'une des revendications 1 ou 2, dans lequel ledit moyen de découpe (30;130) comprend une partie pointue ou une série de dents pour trancher ou découper ledit conduit ou autre moyen de transport de fluide (12;112).

4. Appareil de plomberie selon l'une quelconque des revendications précédentes, dans lequel ledit premier moyen (10;110) comprend deux parties (10',10") susceptibles d'être serrées de façon étanche sur l'un ou l'autre côté de la partie devant être retirée.

5. Appareil de plomberie selon l'une quelconque des revendications précédentes, comprenant un moyen d'étanchéité (42;150) pour fournir un joint étanche entre ledit moyen de passage (32;132) et les régions adjacentes dudit conduit ou autre moyen de transport de fluide (12;112).

6. Appareil de plomberie selon la revendication 5, dans lequel ledit moyen d'étanchéité (42;150) est compressible de manière élastique, et ledit appareil comprend un moyen (22) pour comprimer ledit moyen d'étanchéité (42) pour aider au contact intime de celui-ci avec le conduit ou autre moyen de transport de fluide (12) et ledit moyen de passage (32).

7. Appareil de plomberie selon la revendication 6, dans lequel ledit moyen d'étanchéité comprend un élément d'étanchéité (42) associé audit second moyen (16), et ledit second moyen comprend un moyen (22) pour appliquer une compression audit moyen d'étanchéité (42).

8. Appareil de plomberie selon la revendication 6, dans lequel ledit moyen d'étanchéité comprend un élément d'étanchéité (150; Figure 4) associé audit premier moyen (11) et disposé pour être comprimé lorsque ledit second moyen (16) est totalement engagé avec lui.

9. Appareil de plomberie selon la revendication 2 ou l'une quelconque des revendications dépendantes de celle-ci, dans lequel ledit second moyen (16;128) comprend un élément de découpe/soupape (26/30) définissant ledit moyen de découpe (30) et ledit dispositif de soupape (32/36) et ledit élément de découpe/soupape (26/30) est reçu de façon tournante dans un manchon externe (22), ledit manchon externe (22) étant fileté extérieurement pour engager par vissage ledit premier moyen (10), ce par quoi la position angulaire du dispositif de soupape (32/36) peut être ajustée par rapport audit manchon externe (22).

10. Appareil de plomberie selon la revendication 9, comprenant un moyen de verrouillage déblocable (48) pour empêcher la rotation dudit élément de découpe/soupape (26/30) par rapport audit manchon externe (22), et dans lequel ledit élément de découpe/soupape (26/30) comprend un moyen de marquage ou autres signes indicateurs (50) pour indiquer l'orientation dudit moyen de passage (32).
